# EUROPEAN PATENT APPLICATION

(11) **EP 4 765 230 A1**
(43) Date of publication of application: **24.06.2026**
(21) Application number: 24222653.8
(22) Date of filing: 20.12.2024
(51) Int. Cl.: H01M 4/133, H01M 10/052, H01M 10/056, H01M 10/0565, H01M 10/0587, H01M 6/08, H01M 6/10, H01M 6/18, H01M 4/38, H01M 4/40, H01M 4/583, H01M 4/62, H01M 10/04, H01M 10/44, H01M 50/202, H02J 7/00, E21B 41/00

(54) **ELECTROCHEMICAL CELL WITH A SALT-IN-POLYMER ELECTROLYTE, A SYSTEM COMPRISING THE CELL AND A METHOD OF USING AN ASSOCIATED CATHODE**

(71) Applicant: Metrol Technology Limited, Aberdeen, Aberdeenshire AB21 0GU (GB)
(72) Inventor: Moloney, James Daniel, Aberdeen, AB21 0GU (GB); Hudson, Steven Martin, Aberdeen, AB21 0GU (GB); Tomov, Rumen, Cambridge, CB3 0FS (GB); Kumar, Ramachandran Vasant, Cambridge, CB3 0FS (GB); Jarvis, Leslie David, Aberdeen, AB21 0GU (GB)
(74) Representative: Watson, Craig Simon

(57) **Abstract**

An electrochemical cell having a cathode comprising a fluorinated carbon nanotube (F-CNT), an anode and a solid electrolyte; wherein the solid electrolyte comprises an electrolyte component comprising i. 5 to 50 wt.% of an alkali metal-containing electrolyte salt, and ii. 50 to 95 wt.% of a polymer. Embodiments do not require a carbon-based conductive-adjuvant in the cathode. The thickness of the solid electrolyte may be least 5 microns. A container comprising cell may have space to allow for thermal expansion thereof. They may be used at elevated temperatures greater than 65 °C. or more, such as in a subterranean well.

## Description

### Field of the invention

The present invention concerns the field of alkali metal electrochemical cells and batteries, and in particular solid-state cells and batteries. In particular, the invention relates to cathodes for use with solid polymer-based electrolytes in lithium cells. Aspects of the invention relate to an electrochemical cell comprising solid electrolytes for lithium cells, and the use of such cells at elevated temperatures.

### Background of the invention

Lithium cells are considered a mature technology. However, current liquid electrolytes for lithium metal batteries are associated with risks such as electrolyte leakage, internal shorting, electrode corrosion, and the production of hazardous byproducts; and have a restricted voltage window. The use of solid electrolytes represents one potential solution to the problem of electrolyte leakage and can limit self-discharge within the batteries that shortens the life of a cell. A promising class of solid electrolytes is composite electrolytes, which combine a polymeric electrolyte with an inorganic filler and ionic salt. By "solid" we exclude electrolytes which have liquid or gel components at room temperature and pressure.

Two classes of inorganic fillers have been investigated as additives for use in polymer-based electrolytes: passive fillers and active fillers. Passive fillers do not directly participate in the conduction of ions and include metal oxides such as Al₂O₃, SiO₂, TiO₂, ZrO₂, and BaTiO₃. While passive fillers do not participate directly in the conduction of ions, they do assist in the stability of the conductive amorphous polymer phase by hindering recrystallization of the polymer which can reduce ion conductivity in the polymer matrix. They may under certain circumstances provide interfacial paths for additional ionic conduction.

By contrast, active fillers can directly participate in the conduction of ions through the material and also at the interfaces, while also providing mechanical stability to the amorphous polymer phase. Such active fillers may be referred to as active stabilizers herein. Examples of these active fillers include Li_{1.3}Al_{0.3}Ti_{1.7}(PO₄)₃ (LATP), Li₃N, Li₇La₃Zr₂O₁₂ (LLZO), Li_{0.33}La_{0.557}TiO₃ (LLTO), and Li_{1.4}Al_{0.4}Ge_{1.6}(PO₄)₃ (LAGP), amongst other active fillers.

One of the more promising solid electrolytes is a solid polymer composite electrolyte made from poly(ethylene oxide) (PEO) and LLZO. LLZO used singly by itself as the Solid-State Electrolyte (SSE) can be difficult to process and incorporate in the established cell making and is a brittle material. In a cell this can cause structural failure which risks shorting contact between the cathode and anode, while providing poor contact between the cell electrode and electrolyte. Choi et al (J. Power Sources, Vol. 274, 15 January 2015, pp 458-463) first combined these two materials in a composite electrolyte with tetragonal LLZO as the electrolyte filler and PEO as the matrix and found a maximum conductivity at room temperature of 10⁻⁵ S cm⁻¹. Patent CN118213614A discloses a polymer-based all-solid-state electrolyte wherein a lithium salt is dissolved in a polymer with up to 2 mol/L lithium salt. This corresponds to a weight fraction of the salt is less than 50 wt% of the total electrolyte mass. Such polymer-based electrolytes are known as salt-in-polymer electrolytes. The salt used is chosen to be one of lithium hexafluorophosphate, lithium difluoro oxalato borate, lithium tetrafluoroborate, lithium difluoro sulfimide and lithium bis trifluoromethane sulfonimide, and the polymer is PEO.

Despite various advances, solid-state electrochemical cells typically have poorer conductivity and capacity when compared with more established liquid-state technologies. While the solid electrolytes discussed above go some way to addressing these drawbacks, there remains a need to further improve the electrochemical properties of electrochemical cells that incorporate these solid electrolytes.

The present invention seeks to provide polymer-based solid electrolytes which provide improved metal ion conductivity. It is also an object of the present invention to provide electrochemical cells comprising the solid electrolytes which can be discharged to around 90% or more of their theoretical capacity which for CFx is 865 mAh g⁻¹, where x=1. The invention also seeks to provide solid electrolytes which are thermally stable, i.e. can operate at relatively high temperatures, i.e. from 50 °C to 175 °C, preferably 75 to 130 °C, without significant degradation, that is, more than 10% increase in on-load source resistance with respect to liquid-state electrolyte, or more than 30% delivered theoretical capacity over a period more than 8 years at 130 °C.

The present invention also seeks to provide an electrode that is particularly suitable for use with the polymer-based solid electrolytes described herein, and thus provide an improved electrochemical cell incorporating polymer-based solid electrolytes. One or more of these objectives may be satisfied by cathode and electrolyte compositions, and electrochemical cells, as hereinafter described.

### Summary of the Invention

In accordance with a first aspect of the present invention, there is provided a method of using a cathode for a cell comprising a fluorinated carbon nanotube (F-CNT) at temperatures greater than about 65 °C, preferably greater than about 100 °C, optionally greater than about 120 °C.

Said cathode may be used in a variety of wells including oil and gas wells in general, steam/water injection wells, gas injection wells, geothermal thermal wells, carbon capture and storage (CCS) wells, hydrogen storage wells. In particular, the cathode may be used in geothermal wells or production wells for oil or gas production.

The temperature of use described herein is the environmental temperature and does not take into account any temperature increases caused by operation of the cell. For example, it may be the surrounding temperature immediately before the cell starts to operate.

In accordance with a second aspect of the present invention there is provided an an electrochemical cell comprising:
a. a cathode;
b. an anode; and
c. a solid electrolyte;
   wherein the cathode is an electrode comprising a fluorinated carbon nanotube (F-CNT), and
   wherein the solid electrolyte comprises an electrolyte component and optionally
   a filler, the electrolyte component comprising:
      i. 5 to 50 wt.% of an alkali metal-containing electrolyte salt, and
      ii. 50 to 95 wt.% of a polymer.

Thus the cell may include the cathode of the first aspect of the invention. Preferred and optional features herein of the cathode and cell independently apply to each of the first and second aspects of the invention and are not reiterated for brevity.

The electrochemical cell may be a solid-state electrochemical cell.

The cell may be provided in a pressure-sealed cylindrical container. It may be 12 - 35 mm diameter and may be 50 - 200 mm long. It is typically hermetically sealed. The container is usually metal such as stainless steel. A plurality of cells in the form of layers may be stacked together to form a battery. The battery may have a circular cross-section.

The cells may be shaped into a bobbin shape or a spiral wound shape.

The cell is preferably pliable to be shaped or rolled into a particular shape, such as said bobbin or spiral wound shapes. Therefore, the cell preferably has a Young's Modulus in the range of 0.5 to 500MPa at standard temperature and pressure, preferably measured using a Universal Testing Machine (universal tester) in accordance with ASTM E111 -17.

Whilst a single salt is viable in the electrolyte, it may be advantageous to have more than one salt in a mix to make the electrolyte rubbery. For example, using LiTFSI and LiClO₄ salts.

The anode may be connected to the container. The cathode may connect with an electrically insulated penetrator. The electrical insulation may include an elastomer 'o' ring, moulded plastic (e.g. peek) sleeve. Preferably it includes a glass to metal seal.

The cell container may define a space adjacent the cell to allow for thermal expansion thereof. It may be, for example, a void (vacuum), an inert gas such as argon, or an inert compressible material such as open cell PTFE foam.

The fluorinated carbon material may further comprise one or more additional fluorinated carbon materials, such as those derived from a carbon material selected from the group consisting of activated carbon, coke, pitch coke, charcoal, synthetic or natural carbon fibre, carbon black, graphene, hard carbon, graphite, and composites (carbonizates) or mixtures thereof.

Without wishing to be bound by theory, it is thought that the fluorinated carbon nanotube (F-CNT).is a source of fluorine which reacts with the alkali metal, such as lithium, to form an alkali fluoride (such as lithium fluoride (LiF)). This reaction is the source of energy in the electrochemical cell.

The solid electrolyte of the electrochemical cell may be 0.1 to 90 wt. % or 0.1 to 70 wt.% filler in the form of an inorganic active stabilizer comprising an alkali metal compound.

In some embodiments, the inorganic active stabilizer is Li₇La₃Zr₂O₁₂ (LLZO), or a doped variation thereof.

The solid electrolyte of the electrochemical cell may comprise from 0.1 to 50 wt.% of the filler/inorganic active stabilizer comprising an alkali metal compound.

The cathode may be an electrode comprising:
i) 10-98 wt.% a fluorinated carbon material comprising fluorinated carbon nanotubes (F-CNTs);
ii) 1-45 wt.% an alkali metal-containing salt; and
iii) 1-45 wt.% an organic polymer or copolymer.

More specifically, the cathode may be an electrode comprising:
i) 50-98 wt.% a fluorinated carbon material comprising fluorinated carbon nanotubes (F-CNTs);
ii) 1-35 wt.% an alkali metal-containing salt; and
iii) 1-35 wt.% an organic polymer or copolymer.

It has surprisingly been found that in the electrode of the invention, there is no need for an electron conducting agent (e.g. an additional (adjuvant) conductive carbon source, such as a conductive carbon binder), which is often up to 10% of the mass of the electrode. As a result, more active material is embedded in the same electrode volume leading to better gravimetric and volumetric capacity.

Certain embodiments of the invention therefore include an electrode with less than 5 wt.% of the carbon-based conductive adjuvant, optionally less than 3 wt.%, optionally less than 1 wt.%.

In some preferred embodiments of the invention, the electrode therefore consists essentially of (more preferably consists of): i) a fluorinated carbon material comprising fluorinated carbon nanotubes (F-CNTs); ii) an alkali metal-containing salt as hereinbefore described; and iii) an organic polymer or copolymer as hereinbefore described.

In some preferred embodiments of the invention, the electrode consists essentially of (more preferably consists of): i) a fluorinated carbon material comprising fluorinated carbon nanotubes (F-CNTs); ii) an alkali metal-containing salt as hereinbefore described; iii) an organic polymer or copolymer as hereinbefore described; and iv) an inorganic active stabilizer comprising an alkali metal compound as hereinbefore described (preferably LLZO as hereinbefore described).

The cation of the inorganic active stabilizer may be the same cation of the alkali metal-containing electrolyte salt, such as lithium.

A further aspect of the invention is a system comprising an electrochemical cell as hereinbefore defined coupled with a power control circuit,
wherein the power control circuit is operable to discharge the electrochemical cell at a first voltage and at a second voltage;
wherein the second voltage is lower than the first voltage; and
output terminals electrically connected to the power control circuit for providing the output voltage to a load.

A yet further aspect of the invention is the use of the electrochemical cell as hereinbefore defined at a temperature of greater than about 65 °C, preferably greater than about 100 °C. In certain aspects, the electrochemical cell of the invention may be used for powering a tool in a subterranean well, preferably in a subterranean well for oil and/or gas.

### Detailed Description of the Invention

Throughout, "conductive" refers to ionic or electronic conduction or both, preferably electronic conduction.

The term "solid-state" electrolyte as used herein has its normal meaning in the art, and refers to a system or device in which ionic transport occurs in a solid phase. Without wishing to be bound by theory, it is thought that the structure of fluorinated carbon nanotubes (F-CNTs) allows for effective percolating paths and thus high electrical conductivity and therefore fulfils this purpose without requiring an additional electron conducting agent.

The term "solid composite electrolyte" as used herein refers to an electrolyte composition which is solid at ambient temperature and pressure. For the avoidance of doubt, this does not exclude the possibility that when used at elevated temperatures (i.e. temperatures above ambient temperature), the electrolyte composition may become amorphous, semi-solid, gel-like, partially liquid, or wholly liquid.

The second aspect of the present invention there is provided an electrochemical cell comprising:
a. a cathode;
b. an anode; and
c. a solid electrolyte;
   wherein the cathode is an electrode comprising a fluorinated carbon nanotube (F-CNT), and
   wherein the solid electrolyte comprises:
      i. 5 to 50 wt.% of an alkali metal-containing electrolyte salt, and
      ii. 50 to 95 wt.% of a polymer.

The electrochemical cell may be a solid-state electrochemical cell.

The fluorinated carbon material may further comprise one or more additional fluorinated carbon materials, such as those derived from a carbon material selected from the group consisting of activated carbon, coke, pitch coke, charcoal, synthetic or natural carbon fibre, carbon black, graphene, hard carbon, graphite, and composites (carbonizates) or mixtures thereof.

It has surprisingly been found that in the electrode of the invention, there is no need for an electron conducting agent (e.g. an additional (adjuvant) conductive carbon source, such as a conductive carbon binder), which is often up to 10% of the mass of the electrode. As a result, more active material is embedded in the same electrode volume leading to better gravimetric and volumetric capacity.

Certain embodiments of the invention therefore include an electrode with less than 5 wt.% of the carbon-based conductive adjuvant, optionally less than 3 wt.%, optionally less than 1 wt.%.

Preferably, therefore, the cathode does not further comprise a carbon-based conductive-adjuvant.

The solid electrolyte in the electrochemical cell of the invention comprises:
i. 5 to 50 wt.% of an alkali metal-containing electrolyte salt, and
ii. 50 to 95 wt.% of a polymer.

The alkali metal-containing salt is typically a lithium salt, but other alkali metals such as sodium may be used. The electrolyte salt may comprise one or more of: LiClO₄, LiBF₄, LiPF₆, LiAsF₆, LiCF₃SO₃, LiN(CF₃SO₂)₂, NaCF₃SO₃, LiDFOB, LiBOB, a lithium imide salt. The lithium imide salt may comprise: Lithium bis(trifluoromethanesulfonyl)imide (LiTFSI) or lithium bis(fluorosulfonyl)imide (LiFSI). A preferred alkali metal-containing electrolyte salt is LiFSI or LiTFSI.

The solid electrolyte is a "salt in polymer" electrolyte.

The solid electrolyte may be a solid composite electrolyte as hereinbefore defined. The solid electrolyte as described herein may preferably comprise:
a. 5 to 50 wt.% of an alkali metal-containing electrolyte salt,
b. 50 to 95 wt.% of a polymer, and
c. 0.1 to 90 wt. % or 0.1 to 70 wt.% of an active or passive inorganic stabilizer comprising an alkali metal compound.

The wt.% detailed for the electrolyte above are determined based on the total mass of the electrolyte. References here to the electrolyte include all components a, b and c whilst references to the polymer include only component b.

In some preferred embodiments of the invention, the solid-state composite electrolyte as described herein comprises:
a. 5 to 25 wt.% of an alkali metal-containing electrolyte salt,
b. 15 to 45 wt.% of a polymer, and
c. 45 to 60 wt.% of an active or passive inorganic stabiliser comprising an alkali metal compound.

The polymer is preferably on organic polymer or copolymer. Suitable organic polymers or copolymers include: poly(ethylene oxide), polypropylene oxide), poly(dimethylsiloxane), poly(acrylonitrile), poly(methyl methacrylate), poly(vinyl chloride), poly(vinyl acetate), poly(vinylidene fluoride), poly(vinylidene fluoride-hexafluoropropylene), poly[bis(methyoxy-ethoxy-ethoxy) phosphazene, poly(carbonate), polyphenylene ether), poly(vinylidene fluoride), or blends thereof. As used herein, the term "EO" refers to ethylene oxide groups (monomers) that may be present in the electrolyte. An example of a electrolyte that contains ethylene oxide groups is poly(ethylene oxide) (PEO).

The organic polymer may comprise a copolymer of two or more monomers. For example the co-polymers may comprise PEO-PAN, PEO-PMMA, PEO-PVDF, PMMA-PVDF, PMMA-PAN, PAN-PVDF, or blends thereof.

For particular embodiments, the organic polymer or copolymer may comprise poly(ethylene oxide) or poly(vinylidene fluoride). Preferably, the organic polymer or copolymer may comprise poly(ethylene oxide).

The polymer for use in the solid electrolyte must be an electronic insulator (i.e. does not permit electronic conduction; has an electronic conductivity of less than about 10⁻¹⁰ ohm⁻¹ m⁻¹, e.g. between about 10⁻²⁰ to 10⁻¹⁰ ohm⁻¹ m⁻¹) but which does permit ion transport. It must have a high room temperature dielectric constant, such as above 3, preferably greater than 10. Without wishing to be bound by theory, this is understood to allow the polymer to solvate the alkali-metal containing electrolyte salt, typically by forming Van der Waals bonds between salt and polymer.

Suitable polymers for use in the solid electrolyte are those that solvate alkali salts, especially lithium salts, in order to conduct alkali ions, especially lithium ions, and such that they are poor electronic conductors. These polymers include: polyethylene oxide), polypropylene oxide), poly(dimethylsiloxane), poly(acrylonitrile), poly(methyl methacrylate), poly(vinyl chloride), poly(vinyl acetate), poly(vinylidene fluoride), poly(vinylidene fluoride-hexafluoropropylene), poly[bis(methyoxy-ethoxy-ethoxy) phosphazene, poly(carbonate), polyphenylene ether), poly(vinylidene fluoride), or blends thereof.

The polymer may comprise a copolymer of two or more monomers. For example the co-polymers may comprise PEO-PAN, PEO-PMMA, PEO-PVDF, PMMA-PVDF, PMMA-PAN, PAN-PVDF, or blends thereof. In preferred electrolyte compositions the polymer is selected from: poly(vinylidene fluoride-hexafluoropropylene) copolymer, poly(ethylene oxide) or poly(vinylidene fluoride) and blends thereof.

For particular embodiments, the polymer may comprise poly(ethylene oxide).

For the avoidance of doubt, in the context of the present application, the term "poly(ethylene oxide)" and its abbreviated form "PEO", also encompasses short-chained PEO, which may be referred to in the art as "poly(ethylene glycol)" or "PEG". The polymer may have an average molecular weight (Mw) of at least 10,000 grams per mole, optionally at least 100,000. The average molecular weight (Mw) may be at most 10,000,000 optionally at most 5,000,000 more optionally at most 1,500,000. The polymer for use in the solid composite electrolyte may be substantially amorphous.

When reference to molecular weight of a polymer or average molecular weight of a polymer is made, this is understood to be the number average molecular weight. That is the total mass of all molecules of the polymer divided by the number of molecules.

The alkali metal-containing electrolyte salt may be an inorganic or organic electrolyte salt.

The alkali metal-containing electrolyte salt is typically a lithium electrolyte salt, but other alkali metals such as sodium may be used. For a lithium based cell, the electrolyte salt may comprise one or more of: LiClO₄, LiBF₄, LiPF₆, LiAsF₆, LiCF₃SO₃, LiN(CF₃SO₂)₂, NaCF₃SO₃, LiDFOB, LiBOB, a lithium imide salt. The lithium imide salt may comprise: Lithium bis(trifluoromethanesulfonyl)imide (LiTFSI) or lithium bis(fluorosulfonyl)imide (LiFSI). A preferred alkali metal-containing electrolyte salt is LiTFSI.

The solid electrolyte may be 0.1 to 90 wt. % or 0.1 to 70 wt.% filler formed from an inorganic active stabilizer comprising an alkali metal compound.

The solid electrolyte may comprise from 0.1 to 50 wt.% of the inorganic active stabilizer comprising an alkali metal compound.

The inorganic active stabilizer is referred to interchangeably herein as in inorganic filler.

The inorganic active stabilizer stabilises the electrolyte mechanically. It may be considered as an active, rather than passive filler.

The inorganic active stabilizer typically comprises the same metal ions as that of the alkali metal-containing electrolyte salt ion. Without wishing to be bound by theory, in such cases the inorganic active stabilizer and the electrolyte salt having the same metallic ion may be beneficial for reinforcing ionic conductivity of the said metallic ion.

The inorganic active stabilizer is typically an alkali metal-based ceramic material, preferably lithium-based, which can therefore provide lithium ions which can take part in conduction.

The inorganic filler stabilizes the electrolyte by providing mechanical support which prevents flow of the polymer even at high temperatures, and is also shown to increase the voltage window over which the electrolyte is stable. In this way, the inorganic filler electrochemically stabilises as well as mechanically stabilises the electrolyte.

Examples of suitable inorganic active stabilizers for use in the present invention include one or more of: Li_{1.3}Al_{0.3}Ti_{1.7}(PO₄)₃ (LATP), Li₃N, Li₇La₃Zr₂O₁₂ (LLZO), Li_{0.33}La_{0.557}TiO₃ (LLTO), LLZTO, LLAZO, and Li_{1.4}Al_{0.4}Ge_{1.6}(PO₄)₃ (LAGP), a alkali metal garnet, LiAlO₂, Li₁₀GeP₂S₁₂ (LGPS), lithium ion-conducting glass-ceramic (LICGC), Li₂PO₂N (LiPON), Li_{0.5}La_{0.5}TiO₃, Li_{1.4}Al_{0.4}Ti_{1.6}(PO4)₃, Li1.5Al_{0.5}Ge_{1.5}(PO₄)₃ and Na₃Zr₂Si₂PO₁₂, and doped versions thereof.

The preferred inorganic active stabilizer comprises, or consists of, LLZO preferably doped with for example gallium, strontium, titanium, and/or aluminium. Without wishing to be bound by theory, it is considered that such a dopant helps stabilise the cubic phase which conducts Li-ions.

In some preferred embodiments of the invention, the LLZO may be nanoparticles of LLZO. That is, in the context of the present disclosure, "nanoparticles" refers to particles with a particle size distribution of d50, optionally d70, optionally d90, optionally d95 of less than 1 micrometre. This may be measured by laser diffraction following ISO 13320:2020. Without wishing to be bound by theory, it is thought that using nanoparticles of LLZO permits greater dispersion of the LLZO within the solid electrolyte without compromising the mechanical stability of the solid electrolyte. The inorganic active stabilizer may be present in the solid electrolyte in an amount of 0.1 to 90 wt. % or 0.1 to 70 wt.%, preferably 20 to 70 wt.%, more preferably 45 to 60 wt.%. The optimum amount of inorganic active stabilizer is typically about 50 wt.% with respect to the total mass of the electrolyte.

The room temperature ionic conductivity range of the finished electrolyte is preferably in the range of between 10⁻⁷ to 10⁻³ S cm⁻1.

The conductivity of the finished electrolyte at 60 °C is preferably in the range of between 10⁻⁵ and 10⁻³ S cm⁻¹, such as about 5.7 x 10⁻⁵ S cm⁻¹.

The conductivity of the finished electrolyte at at 90 °C is preferably in the range of between 10⁻³ and 10⁻¹ S cm⁻¹, such as about 5.8 x 10⁻³ S cm⁻¹.

The conductivity of the finished electrolyte at 120 °C is preferably in the range of between 10⁻² and 1 S cm⁻¹, such as about 3.0 x 10⁻² S cm⁻¹.

The conductivity of the finished electrolyte at 150 °C is preferably above 10⁻¹ S cm⁻¹, such as about 1.9 x 10⁻¹ S cm⁻¹.

Without wishing to be bound by theory, it is thought that the inorganic active stabilizer comprising an alkali metal compound stabilizes the electrolyte and provides alkali metal ions which promote conduction thereof through the electrolyte. The inorganic active stabilizer is understood to stabilise the polymer so as to prevent or limit crystallisation, which can adversely affect the ion conductivity of the polymer. The inorganic active stabilizer is also understood to modify the electrolyte by improving ion conductivity. The inorganic active stabilizer preferably has an ability to form Van der Waals bonds with the electrolyte polymer.

The salt may dissolve in the polymer such that the ceramic inorganic active stabilizer may be interspersed in the polymer/salt solid solution. This may be achieved by any suitable method, such as by mixing fine stabilizer and salt particles and dispersing these in the polymer, for example by liquid casting with a solvent that can be evaporated away or by other high-shear force mixing methods. For the avoidance of doubt, other suitable methods may be used to obtain a suitable interspersed mixture of the polymer, electrolyte salt and active stabilizer. One preferred method of interspersing the polymer, electrolyte salt and inorganic active stabilizer is by sonication of a mixture of at least two of these components. A further method uses a vacuum centrifugal mixer.

Optionally, the electrode for a solid-state electrochemical cell, may comprise:
i) 50-98 wt.% a fluorinated carbon nanotube (F-CNT);
ii) 1-35 wt.% an alkali metal-containing salt; and
iii) 1-35 wt.% an organic polymer or copolymer.

More optionally, the electrode for a solid-state electrochemical cell, may comprise:
i) 70-98 wt.% a fluorinated carbon material comprising fluorinated carbon nanotubes (F-CNTs);
ii) 1-29wt.% an alkali metal-containing salt; and
iii) 1-29 wt.% an organic polymer or copolymer.

Even more optionally, the electrode for a solid-state electrochemical cell, may comprise:
i) 70-98 wt.% a fluorinated carbon material comprising fluorinated carbon nanotubes (F-CNTs);
ii) 1-20 wt.% an alkali metal-containing salt; and
iii) 1-20 wt.% an organic polymer or copolymer.

The electrode may also include an inorganic filler. The inorganic filler may be a passive inorganic filler, such as, but not limited to, Al₂O₃, SiO₂, TiO₂, ZrO₂, and BaTiO₃. Alternatively, or additionally, the inorganic filler may be an active inorganic filler, referred to as an active stabilizer, such as (but not limited to) Li_{1.3}Al_{0.3}Ti_{1.7}(PO₄)₃ (LATP), Li₃N, Li₇La₃Zr₂O₁₂ (LLZO), Li_{0.33}La_{0.557}TiO₃ (LLTO), and Li_{1.4}Al_{0.4}Ge_{1.6}(PO₄)₃ (LAGP). Preferably the inorganic filler, where present, is an inorganic active stabilizer comprising Li₇La₃Zr₂O₁₂ (LLZO). Preferably the LLZO is as hereinbefore described in relation to the solid electrolyte.

It has surprisingly been found that in the electrode as hereinbefore described, there is no need for an electron conducting agent (e.g. an additional (adjuvant) conductive carbon source, which is often up to 10% of the mass of the electrode in conventional electrochemical cells. As a result, more active material is embedded in the same electrode volume leading to better gravimetric and volumetric capacity.

Without wishing to be bound by theory, it is thought that the structure of fluorinated carbon nanotubes (F-CNTs) allows for effective percolating paths and thus high electrical conductivity and therefore fulfils this purpose without requiring an additional electron conducting agent.

Preferably, therefore, the electrode does not further comprise a carbon-based conductive adjuvant. Thus certain preferred electrodes for use as a cathode in the electrochemical cell of the invention do not comprise, or consist essentially of, a carbon-based conductive adjuvant. In such cathodes, a carbon-based conductive adjuvant is preferably present in an amount of less than about 10 wt.%, preferably less than about 5 wt.%, more preferably less than about 2 wt.%, still more preferably less than about 1 wt.%, e.g. less than about 0.5 wt.% or less than about 0.1 wt.%. The electrochemical cell as described herein may comprise a cathode (e.g. an electrode as hereinbefore described) in intimate contact with a solid composite electrolyte as hereinbefore described, and an anode in intimate contact with the electrolyte, where the anode comprises the alkali metal (typically lithium), or an alloy comprising the alkali metal.

The term "intimate contact'" as used herein means contact which permits transfer or permeation of ions (ionic conduction) or electrons (electronic transfer) through the contact interface.

Electrodes, and particularly cathodes, usually also contain some amount of the solid composite electrolyte, or components thereof. However, in some preferred embodiments of the present invention, the cathode tends to have 5 - 35 wt.% of salt/polymer solution relative to the total electrode incorporated therein. It has surprisingly been found that the incorporation of a specific mass percentage of the salt/polymer solution into the electrode (i.e. cathode) of the invention mitigates the need for the addition of conventionally used binders or improves performance further.

Without wishing to be bound by theory, it is thought that this incorporation of the salt/polymer solution into the electrode provides a continuous ionic path within the cathode mass.

Thus in preferred electrochemical cells of the invention, the organic polymer or copolymer of the cathode and the polymer of the solid electrolyte comprise the same material. The organic polymer or copolymer of the cathode and the polymer of the electrolyte preferably both comprise polyethylene oxide), and more preferably comprise poly(ethylene oxide) optionally of the same M_{w}.

In addition, the alkali metal-containing salt of the cathode and the alkali metal-containing electrolyte salt of the electrolyte preferably comprise the same material, and more preferably the alkali metal-containing salt of the cathode and the alkali metal-containing electrolyte salt of the electrolyte both comprise lithium bis(trifluoromethanesulfonyl)imide (LiTFSI).

In addition, the inorganic active filler of the solid electrolyte and the optional inorganic filler of the cathode preferably comprise the same material, and more preferably comprise Li₇La₃Zr₂O₁₂ (LLZO). Preferably the LLZO is as hereinbefore described in relation to the solid electrolyte.

The anode may comprise carbon electrode material such as lithiated carbon, a metal or metal alloy (preferably alkali metal or alloy) plate or foil. Typically the anode comprises or consists of lithium or a lithium-based alloy or lithium titanate. The anode may comprise an Li-Me alloy material, wherein Me is selected from one or more of Mg, Ca, Al, Si, Ge, Sn, Pb, As, Sb, Bi, Pt, In, Ag, Au, Ti, Zn or Cd; or may be a carbon-containing material, e.g. graphite. These elements may be used to modify chemical or physical properties of the anode, such as to provide a host for Li (e.g. C) or provide capacity from surface reactions (e.g Si, Sn, Pb etc.), increase structural strength (e.g. Al, Mg etc.) or to prevent degradation (e.g. Pt, Au, Ag etc.).

The electrochemical cell may have a generally planar (including a rolled-planar structure), multi-layered configuration. For example, the cathode may provide a proximal planar layer, the solid composite electrolyte may provide an intermediate planar layer juxtaposed the proximal planar layer, and the anode may provide a distal planar layer juxtaposed the intermediate planar layer. The solid composite electrolyte layer is thus, in this case, sandwiched between the proximal and distal electrode layers.

Whilst the thickness of electrolyte layers is conventionally minimised, in the present invention, the thickness of the solid electrolyte layer may be at least 5 microns, optionally at least 10 microns, more optionally at least 25 microns, even more optionally at least 50 microns, or at least 200 microns. In some embodiments, the thickness of the solid electrolyte layer may be up to 250 microns. The greater the value of the ionic conductivity at the preferred operating temperature, the thicker the electrolyte can be, offering benefits in decreasing self-discharge. In other words, the improved electrochemical properties that result from the combination of the electrode (e.g. cathode) as described herein with the solid composite electrolyte as described herein permits the use of a greater thickness of electrolyte layer than is standard in the art. This greater thickness would normally be undesirable due to the increased resistance and resulting poor performance of a relatively thick electrolyte layer, but the improved conductivity and transport number that result from the combination of the electrode and solid composite electrolyte composition in the electrochemical cell of the invention is such that a functioning cell with sufficient power and low self-discharge can be formed with this thicker layer.

Solid metal terminals may be provided in intimate contact with each of the anode and cathode. These are exposed (or spatially accessible) to permit integration into an electrical circuit.

The electrochemical cell is typically a primary cell (i.e. one which is not rechargeable, or which is intended for a single use).

An electrochemical cell as hereinbefore described may be configured (without limitation) as a bobbin cell, or a spiral wound cell, or as a coin/button cell, pouch cell, or as a flat plate cell.

A further aspect of the invention provides a system comprising an electrochemical cell as hereinbefore described coupled with a power control circuit,
wherein the power control circuit is operable to discharge the electrochemical cell at a first voltage and at a second voltage;
wherein the second voltage is lower than the first voltage; and
output terminals electrically connected to the power control circuit for providing the output voltage to a load.

Preferably, the second voltage is at least 20%, preferably at least 50% of the first voltage.

Optionally the second voltage is less than the first voltage, that is less than 100% of the first voltage.

In some preferred embodiments of the system as hereinbefore described, the power control circuit is a DC-to-DC voltage convertor.

Optional and preferred features of the system in accordance with the further aspect of the invention are independently optional and preferred features of the electrochemical cell according to the second aspect of the invention, and these features are not repeated here for brevity.

It has surprisingly been found that the electrochemical cell as described herein can be used to provide lower voltage applications at elevated temperatures (e.g. greater than about 60 °C, greater than about 65°C, greater than about 95 °C, greater than about 120 °C, e.g. between 65 and 150 °C) in order to derive another 800+ Wh / Kg of the cathode mass. To take advantage of the additional charge provided by the lower voltage plateau, the electronic circuitry and equipment powered by cells and batteries described herein includes a DC to DC converter to accommodate the roughly 2:1 change in terminal voltage during discharge.

When 'plateau' is used to describe the shape of the voltage-capacity profile on discharge, it is used to describe a region wherein the voltage is generally constant with changing capacity. The profile may not be strictly flat and instead may have a gradual slope, however it remains distinct from regions wherein the voltage is changing sharply with capacity. That is +/- 15% of the median voltage at >90% of a given capacity range. In other words the voltage is similar over the range, excepting any minor temporary variations, for example as a result of measurement error or measurement tolerance.

In accordance with a further aspect of the invention there is provided a battery comprising a plurality of electrochemical cells as hereinbefore defined arranged in parallel or in series.

In accordance with a further aspect of the invention there is provided the use of an electrode, an electrochemical cell as claimed, or a battery as hereinbefore defined for powering a tool in a subterranean well such as for oil and/or gas.

In an additional aspect of the invention there is provided a method of manufacturing an electrochemical cell as hereinbefore described comprising providing a liquid precursor of the solid composite electrolyte as hereinbefore described and depositing said liquid precursor as one or more layers on a surface of the cell and causing or allowing the deposited layer(s) to solidify in situ to form the solid composite electrolyte. The layers may be deposited by printing, especially inkjet printing, or other known manufacturing methods. The rheological properties of the precursor is tuned with respect to the deposition method. The liquid precursor includes formulations of inks and soft solids such as pastes, where the amount of liquid to solid ratio is lowered.

The liquid precursor may be a slurry or suspension of solid particles in a liquid carrier. The liquid carrier may comprise a polymer or monomer, which may be dissolved in a solvent. The polymer or monomer may be a solid or a liquid prior to being dissolved in a solvent. Solidification may be by evaporation of the solvent, or by polymerisation of the polymer (or its monomer).

The solid-state electrolyte obviates the need for a conventional separator layer or membrane between the anode and cathode to prevent shorting by offering a physical barrier, and because in absence of a liquid electrolyte, migration of liquid or gel electrolyte is not an issue with solid electrolytes. Thus, a distinct separator layer or membrane may be absent in the cells of the present invention.

A further aspect of the invention is the use of an electrochemical cell or a battery as herein described for powering a tool in a subterranean well for oil, gas, or other hydrocarbons. This use may be at a temperature of greater than about 60 °C, greater than about 65 °C, preferably greater than about 120 °C. Preferably, this use is for powering a tool in a subterranean well for oil, gas, or other hydrocarbons.

Optional and preferred features of the electrode in accordance with the first aspect of the invention are independently optional and preferred features of the cathode according to the further aspects of the invention, and these features are not repeated here for brevity.

It has surprisingly been found that the electrochemical cell and battery of the invention is particularly suitable for use under conditions (e.g. temperature and pressure) that are particularly challenging for existing technologies. In particular, the electrochemical cell and battery of the invention have been found to be stable against degradation and self-discharge at elevated temperatures and/or elevated pressures. This stability is maintained at temperatures of greater than about 60 °C, greater than about 65 °C, greater than about 95 °C, greater than about 120 °C, e.g. between 65 and 150 °C. Indeed, embodiments of the present invention may function at even higher temperatures, such as 200 - 250 °C.

Without wishing to be bound by theory, it is thought that the solid composite electrolyte as described herein can operate safely at higher temperatures due to the absence of a liquid solvent, which may be flammable or cause mechanical damage to an electrochemical cell through partial vaporisation or off-gassing. It is also thought that the solid composite electrolyte accommodates volume changes (e.g. expansion) in the electrode (e.g. cathode) throughout cycling of the electrochemical cell and throughout temperature variations in use. This also minimises the impact on the performance of the electrochemical cell (or battery) from any phase changes that may occur in any of the components of the electrochemical cell (or battery) as a result of variations in the operating conditions (e.g. temperature, pressure) during use.

Embodiments of the present invention will now be described with references to the accompanying drawings in which:

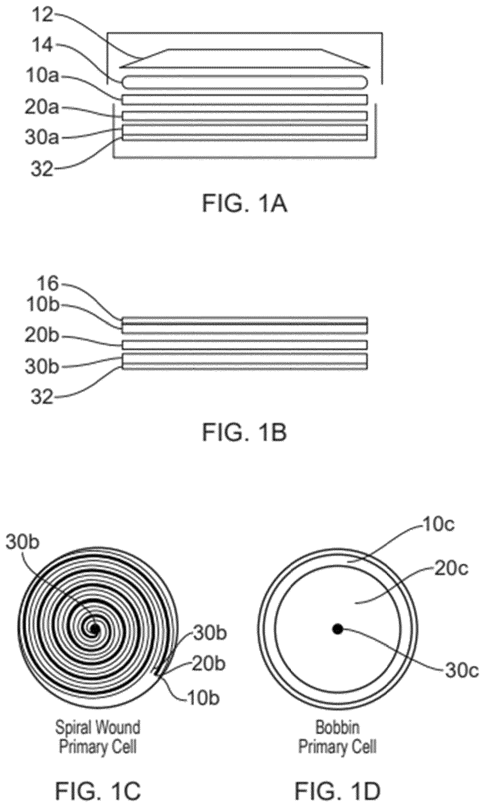

Figure 1A is a schematic exploded view of a coin cell with solid state electrolyte. The anode 10a and cathode 30a are placed either side of the electrolyte 20a with a spacer 14 and spring 12 used to ensure even pressure is applied across the surface of the cell. A current collector 32 is provided below the cathode.
Figure 1B is a schematic exploded view of the layers of a spiral wound cell before they are shaped into a spiral, showing the anode 10b, electrolyte 20b, and cathode 30b with current collector 32. An insulator 16 is provided above the anode 10b.
Figure 1C is a schematic diagram of the Fig, 1B layers shaped as a spiral in a spiral wound cell.
Figure 1D is a schematic diagram of a bobbin cell. A central cathode 30c is separated from the anode 10c formed as an outer ring, by the intervening electrolyte 20c.

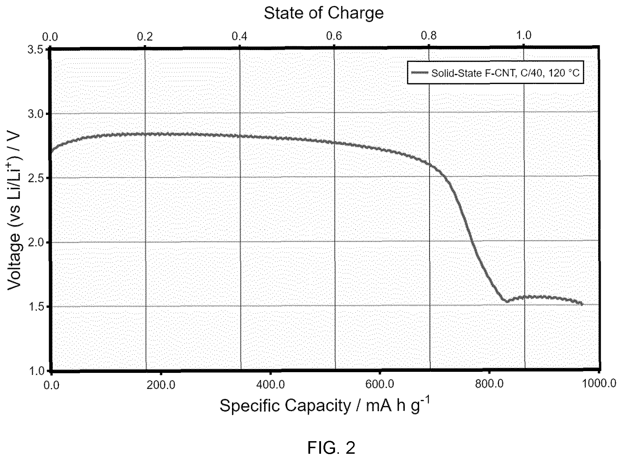

Figure 2 shows a typical discharge curve to demonstrate the high-capacity capability of the invention. Initially the voltage drops from approx. 3 V to 2.65 V due to the low electronic conductivity of the highly fluorinated carbon. Upon reaction with lithium ions, fluorine is lost from the carbon and so electronic conductivity rapidly increases resulting in the voltage recovery to 2.7 V to 2.9 V during the first 10% discharge. Once the available fluorine is fully consumed, the voltage drops significantly but further capacity can be utilised at a lower voltage plateau of approximately 1.6 V.

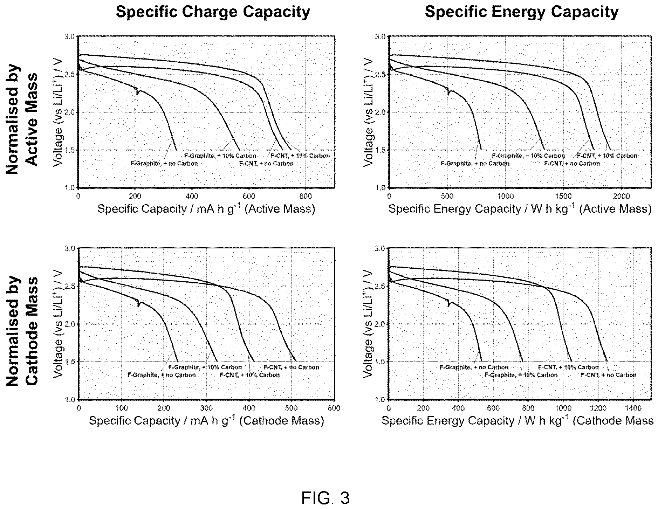

Figure 3 shows the discharge data for cells made with and without additional electron-conducting carbon using fluorinated graphite or fluorinated CNT as the active material. These data show that F-CNTs achieve higher performance in solid-state cells. Without wishing to be bound by theory, it is thought that this may be due to improved connectivity between electrolyte molecules and nanotubes vs electrolyte molecules and graphite. The data also shows that although adding carbon allows for higher utilisation of the F-CNTs (i.e. higher capacities when normalised by active mass), a lower capacity is achieved when normalised by total cathode mass.

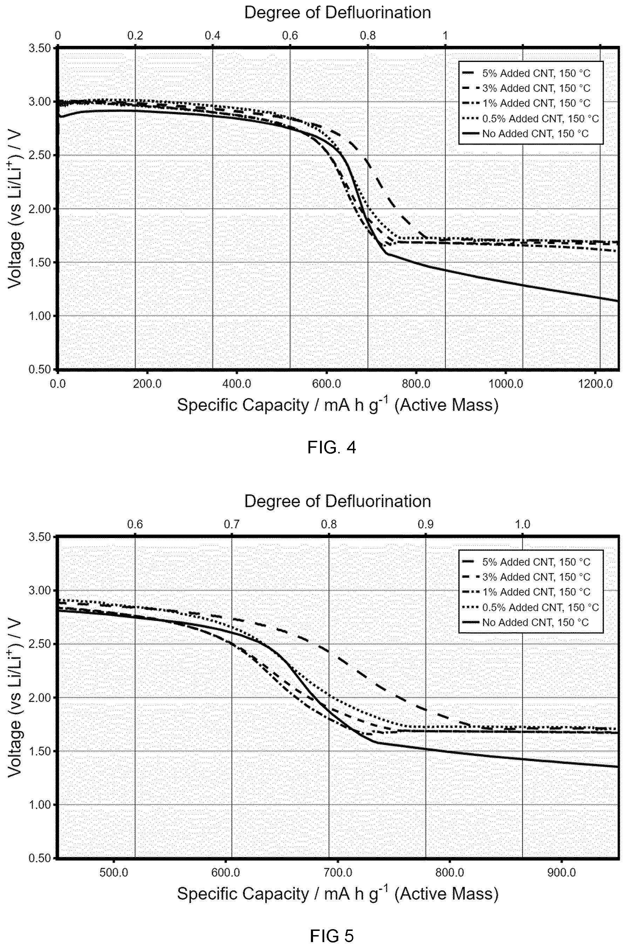

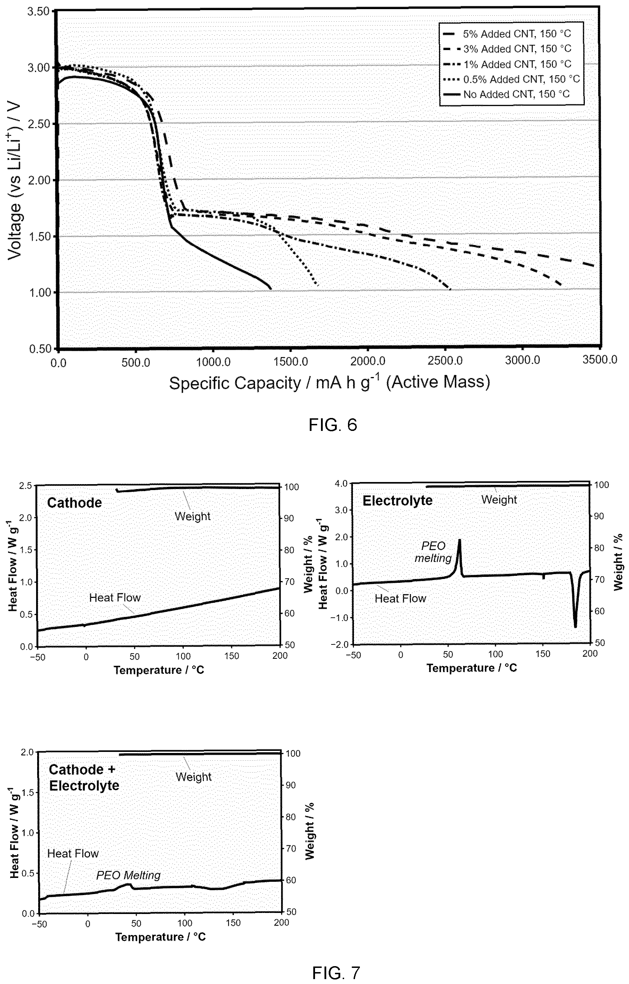

Figure 4, Figure 5 and Figure 6 show that reducing the carbon content of the cathode makes little difference to the performance of the cells. This is explained by the high electronic conductivity of partially defluorinated F-CNTs enabling sufficient electronic conduction without need for additional conductive carbon as would be typical. Figure 6 is a wider view of Figure 4 to emphasise the large capacities available in the second plateau, and how the carbon content appears to affect the capacity.
Figure 7 illustrates TGA/DSC data to show the thermal stability of the cell components. No noticeable mass change is observed upon heating to 200 °C in the cathode (comprised of F-CNT, PEO and LiTFSI), the electrolyte (comprised of LLZO, PEO and LiTFSI) and in the combined cathode and electrolyte. This demonstrates that no unwanted gas-producing processes such as boiling or chemical reaction occur in this temperature range. The heat flow data identifies the known endothermic process of the PEO melting in the cathode and also an unknown exothermic process. This has been identified as a process occurring within the LLZO and possibly the formation of an altered structure in the LLZO due to diffusion of Al from the sample holder to the LLZO.

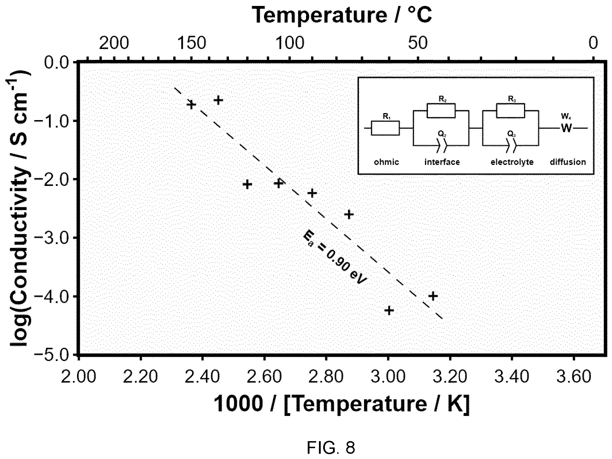

Figure 8 provides an Arrhenius plot for the solid electrolyte used in this invention. The activation energy for lithium ion diffusion in the electrolyte is calculated to be 0.9 eV. It also shows that above temperatures of approximately 60 °C the conductivity is sufficient to operate the battery at reasonable currents (i.e. the ionic conductivity is greater than 1 mS cm⁻¹).

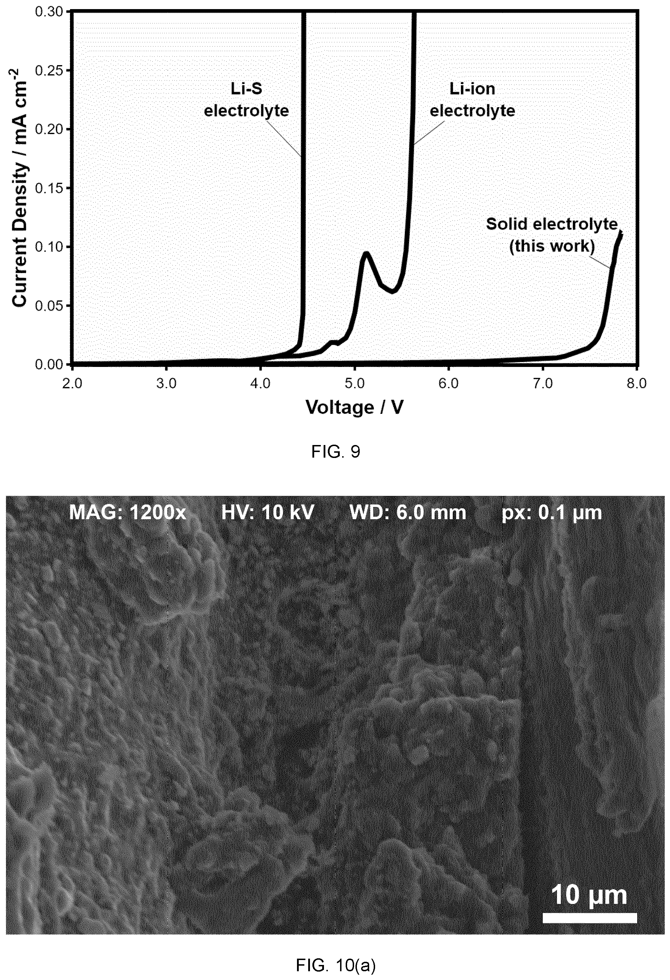

Figure 9 shows that the solid electrolyte has far greater chemical stability than typical liquid electrolytes. This data was collected via linear sweep voltammetry wherein the electrolyte is placed between a lithium metal chip and carbon-coated aluminium electrode. Any current measured will be the result of chemical breakdown of the electrolyte.
Figures 10(a) to 10 (f) show EDX mapping which was performed on a cell that had been held at 150 °C for several weeks.

### EXAMPLES

The following is a description by way of example only and with reference to the figures of the drawings of modes for putting the present invention into effect.

### Materials

All materials used are commercially available from known suppliers. Fluorinated carbon nanotubes (F-CNTs) were purchased from ACS Materials. Polyethylene oxide (PEO) with average molecular weight of approximately 300,000 g mol⁻¹ was purchased from Sigma Aldrich. Lithium bis(trifluoromethanesulfonyl)imide (LiTFSI) was purchased from Sigma Aldrich. Lithium lanthanum zirconium oxide (LLZO) was purchased from MSE Supplies.

### Example 1 - Fabrication of the electrode

The electrode is fabricated using 0.07g F-CNT, 0.02g PEO (M_{w} ≈ 300,000 g mol⁻¹) and 0.01g LiTFSI per 1g N-methyl-2-pyrrolidone (NMP). The F-CNT, PEO and LiTFSI are added to an airtight vial containing the NMP. This is then sonicated using ultrasonic sound waves for 30 min in a water bath at 65 °C. Whilst still warm, this cathode mixture is doctor bladed onto carbon-coated aluminium (1 µm carbon on 16 µm aluminium), with a thickness setting of 250 µm. This is then dried in a vacuum oven at 50-60 °C overnight.

The electrode, once dried, comprises 70% F-CNTs by mass.

### Example 2 - Fabrication of the electrolyte

The electrolyte is fabricated in a similar manner to the electrode as described in Example 1. For each 1g of NMP, 0.36g LLZO, 0.24g PEO and 0.12g LiTFSI are used. First, in an argon environment, the LLZO, LiTFSI and half of the PEO are added to the NMP in an airtight vial. This is sonicated for 30 min in a water bath at 65 °C. Then, the remaining PEO is added in an argon environment. The vial is closed again, and sonicated again for 30 min in a water bath at 65 °C. The resultant paste is doctor bladed whilst still warm directly on top of the dried electrode with a thickness of 400 µm. This is dried in a vacuum oven at 50-60 °C overnight.

As an alternative, the electrolyte may be prepared using a vacuum centrifugal mixer, such as a Thinky^{™}.

The electrolyte, after drying, is composed of 50 wt.% inorganic Li-ion conducting agent and 50 wt.% salt-in-polymer Li-ion conducting agent by mass. The inorganic material is nanoparticles (defined above) of gallium doped lithium lanthanum zirconium oxide (LLZO).

### Example 3 - Mechanical stability of the electrolyte

To assess the effect of LLZO on the mechanical stability of electrolytes of the invention, two electrolyte compositions were prepared as described in Example 2 and having the following compositions:
Electrolyte 1 (without LLZO): 33 wt% LiTFSI; 67 wt% PEO
Electrolyte 2: 17 wt% LiTFSI; 33 wt% PEO; 50 wt% LLZO

Each electrolyte, was drop cast onto carbon-coated aluminium foil as two 2 cm diameter spots. These were then dried at 65 °C for 12 hrs under vacuum. The dried spots were then inclined at 60° to the horizontal and heated to 120 °C. Photographs were taken every 3 h.

The results show that the electrolyte without LLZO begins to advance down the incline over the duration of the test period. In contrast, the electrolyte containing LLZO which does not change noticeably over the 6 h test.

These results show that the electrolyte is mechanically stabilised by the addition of LLZO.

### Example 4 - Electrochemical testing

Cells were tested with the electrode of Example 1 and the electrolyte of Example 2 in conjunction with a lithium foil disc (as an anode) via electrochemical impedance spectroscopy (EIS) and discharge voltage vs capacity measurements at varying current rate, with both capacity and current rate normalized with respect to mass of the cathode active material. The results of these tests are shown in Figure 2.

These tests generally show that at temperatures above the melting point of the polymer (~55 °C) we can achieve very close to the theoretical normalised capacity of the active material in the cathode which is fluorinated carbon nanotubes (865 mA h g⁻¹).

The graph shown in **Error! Reference source not found.** illustrates the discharge capacity at C/40 for a solid-state cell with F-CNT in the cathode. This shows good discharge capacity at 120 °C. Commercial liquid electrolytes tend not to function, or are significantly inferior, above 60 °C.

### Discharge curves - Salt in polymer cells

Discharge curves for all-solid-state electrochemical cells fabricated with the electrolyte described above in Example 2 (PEO) were measured. The cathodes of the cells were fabricated with fluorinated carbon material comprising i) fluorinated carbon nanotubes (F-CNT) and ii) fluorinated graphite (F-graphite), and a) without carbon adjuvant and b) with 10 wt.% super-P carbon adjuvant added. The compositions of each cathode tested in this example are shown in Table 1 below.

**Table 1: Composition of cathodes tested in Figure 3**

| | **Weight Percentage / wt. %** | | | |
|---|---|---|---|---|
| | **F-CNT** | **F-Graphite** | **Carbon** | **PEO + LiTFSI** |
| **F-CNT w/ C** | 55 | - | 11 | 26 |
| **F-CNT w/o C** | 68 | - | - | 32 |
| **F-Graphite w/ C** | - | 57 | 13 | 30 |
| **F-Graphite w/o C** | - | 68 | - | 32 |

The results are shown in **Error! Reference source not found..**

The graphs shown in **Error! Reference source not found.** illustrate i) the specific gravimetric energy density which normalises capacity against the active material mass, and ii) the plotted data normalised to the total cathode material mass. The data in each of these graphs are for operation at 120 °C and compare the performance of F-CNT with F-Graphite additive in the cathode.

Whilst one may expect fluorinated graphite to have higher capacity, the data here demonstrates the surprising findings that whilst capacity is still good for fluorinated graphite, capacity is actually increased when using fluorinated carbon nanotubes rather than fluorinated graphite (both with and without a carbon adjuvant).

Table 2 below shows the energy capacity of the cells when normalised by the active material mass to show the close-to-theoretical performance, and by cathode mass to show the improved energy density of FCNT cells that do not require additional conductive carbon over traditional F-graphite cells that do.

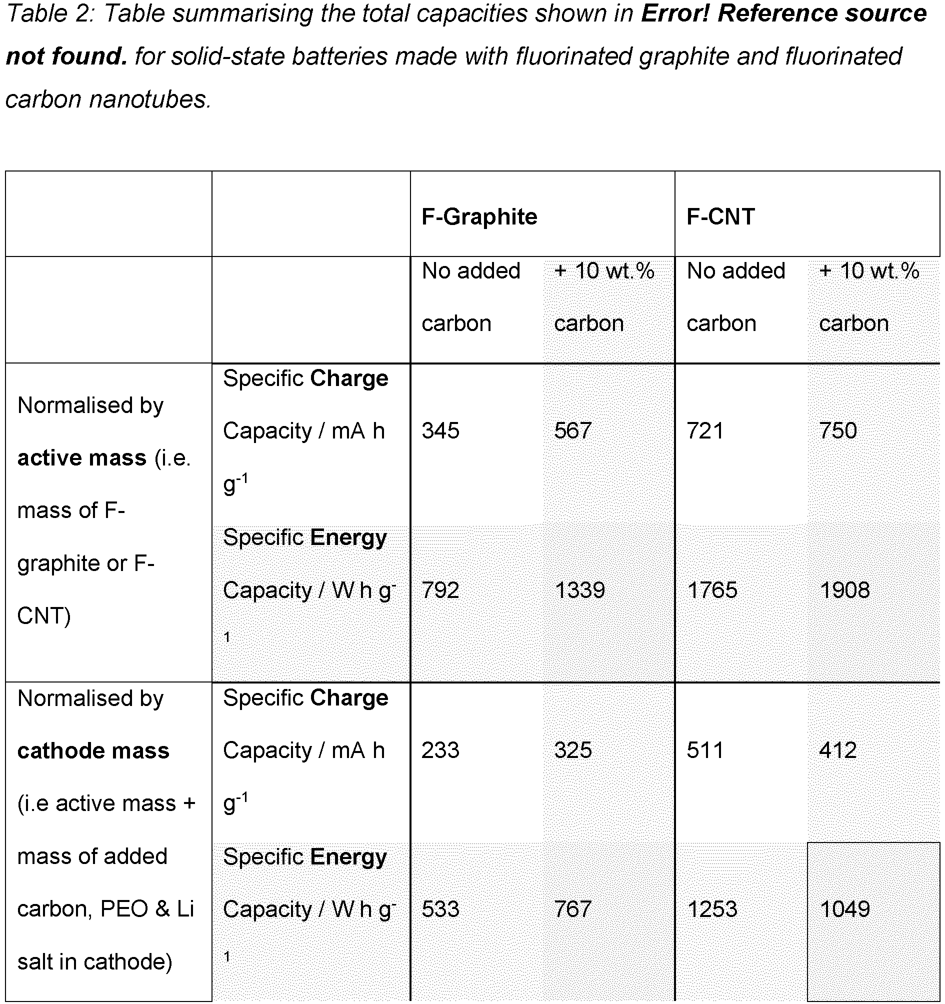

The results in Figure 3 and Table 2, when compared with literature, also suggest F-graphite suffers greatly when included in solid electrolyte cells whereas FCNTs do not.

The graph shown in Figure 4 illustrates that this discharge capacity can be achieved without the use of a carbon adjuvant, which in this case is non-fluorinated CNTs, and at 150 °C. This discharge capacity is obtained at 0.5 wt.%, 1 wt.%, 3 wt.% and 5 wt.% of CNTs, and shows a significant improvement over the comparative example in which no CNTs is added. Surprisingly, this effect is largely independent on the amount of CNTs present.

The theoretical maximum here is around 865 mA h g⁻¹. Surprisingly, after the voltage drop when nearing this value, a second lower voltage plateau ensues. This can be seen in Figure 4, Figure 5, and Figure 6, and demonstrates the ability of electrodes, cells and batteries described herein to enhance capacity (e.g. cp lithium ion capacity) at the lower voltage plateau of around 1.8 V at high temperatures (e.g. 150 °C). This effect is most pronounced with 3 wt.% and 5 wt.% F-CNT in the electrode.

This surprising advantage of the electrodes, cells and batteries described herein can be used to provide lower voltage applications at such temperatures in order to derive another 800+ Wh / Kg of the cathode mass. To take advantage of the additional charge provided by the lower voltage plateau, the electronic circuitry and equipment powered by cells and batteries described herein includes a dc to dc converter to accommodate the roughly 2:1 change in terminal voltage during discharge.

### Example 5 - EDX mapping

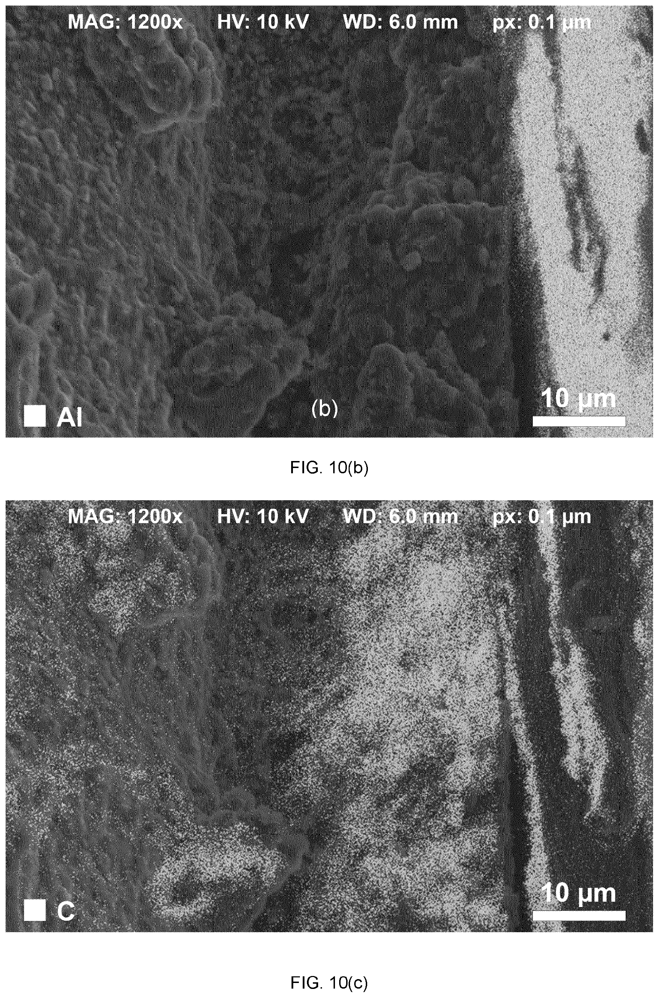

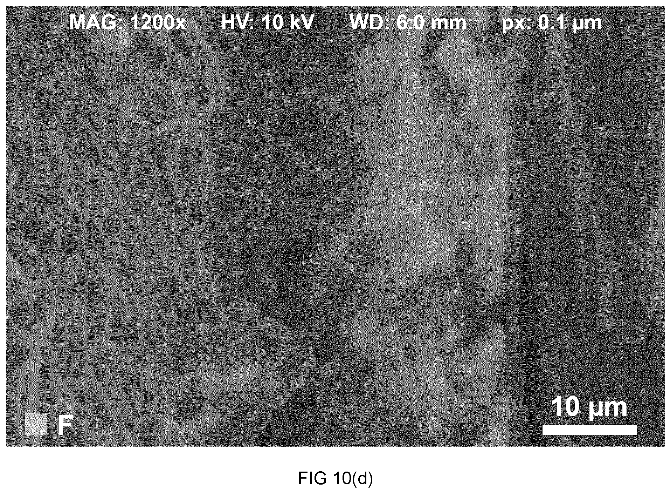

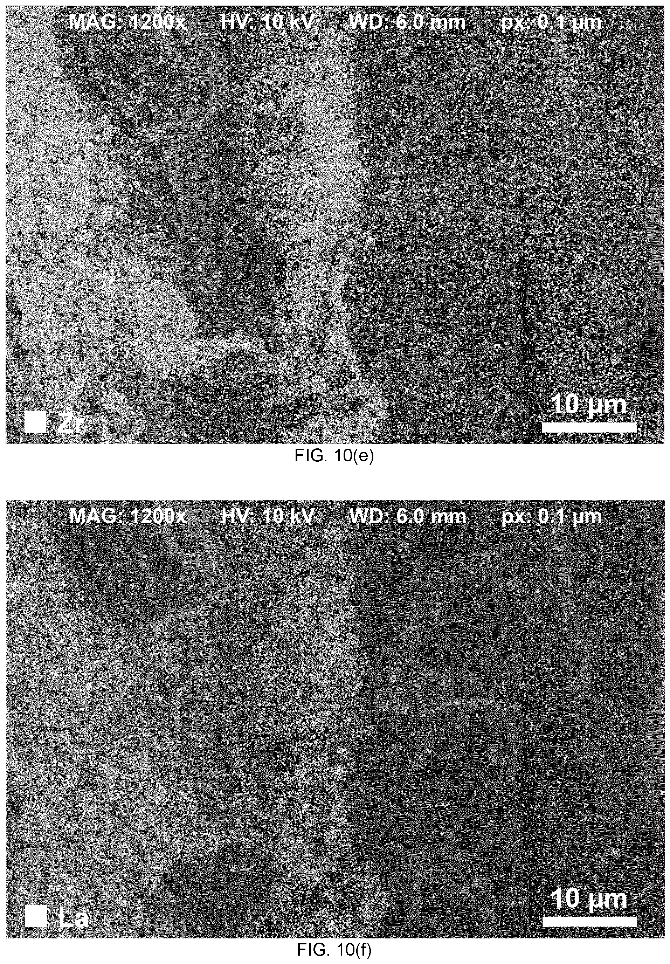

Figure 10 shows energy-dispersive X-ray spectroscopy (EDX) mapping which was performed on a cell that had been held at 150 °C for several weeks.

An FEI Nova NanoSEM was used to obtain secondary electron images with a beam energy of 10 keV and also energy dispersive x-ray (EDX) maps for the high abundance elements in the electrode and electrolyte (carbon, fluorine, lanthanum, zirconium, aluminium). Note, lithium is excluded because it is not easily detectable by EDX spectroscopy.

From Figure 10 it can be seen that there are clear, distinct layers of the current collector (C-coated aluminium), cathode (fluorinated carbon) and the electrolyte (containing lithium lanthanum zirconium oxide). This means the electrolyte, and therefore the battery, is mechanically stable even though the PEO is in a molten state at 150 °C. The LLZO is mechanically supporting the PEO.

Especially in view of their longevity and performance at elevated temperatures, embodiments of the present invention can be used in a variety of wells including oil and gas wells in general, steam/water injection wells, gas injection wells, geothermal thermal wells, carbon capture and storage (CCS) wells, hydrogen storage wells. In particular, the may be used in geothermal wells or production wells for oil or gas production. As such certain embodiments may perform for, for example, 8 years. Indeed, certain embodiments may perform in a well for much longer, such as for 15 to 20 years.

## Claims

1. An electrochemical cell comprising:
a. a cathode;
b. an anode; and
c. a solid electrolyte;
wherein the cathode is an electrode comprising a fluorinated carbon nanotube (F-CNT), and
wherein the solid electrolyte comprises an electrolyte component and optionally a filler, the electrolyte component comprising:
i. 5 to 50 wt.% of an alkali metal-containing electrolyte salt, and
ii. 50 to 95 wt.% of a polymer.

2. The electrochemical cell of claim 1, wherein 0.1 - 90wt% of the solid electrolyte comprises a filler in the form of an inorganic active stabilizer comprising an alkali metal compound.

3. The electrochemical cell of claim 2, wherein the inorganic active stabilizer comprises one or more of Li_{1.3}Al_{0.3}Ti_{1.7}(PO₄)₃ (LATP), Li₃N, Li₇La₃Zr₂O₁₂ (LLZO), Li_{0.33}La_{0.557}TiO₃ (LLTO), LLZTO, LLAZO, and Li_{1.4}Al_{0.4}Ge_{1.6}(PO₄)₃ (LAGP), an alkali metal garnet, LiAlO₂, Li₁₀GeP₂S₁₂ (LGPS), lithium ion-conducting glass-ceramic (LICGC), Li₂PO₂N (LiPON), Li_{0.5}La_{0.5}TiO₃, Li_{1.4}Al_{0.4}Ti_{1.6}(PO₄)₃, Li1.5Al_{0.5}Ge_{1.5}(PO₄)₃ and Na₃Zr₂Si₂PO₁₂.

4. The electrochemical cell of claim 3, wherein the inorganic active stabilizer comprises Li₇La₃Zr₂O₁₂ (LLZO), and optionally further comprises one or more dopants.

5. The electrode as claimed in any preceding claim, wherein the alkali metal-containing salt comprises one or more of: LiClO₄, LiBF₄, LiPF₆, LiAsF₆, NaCF₃SO₃, LiCF₃SO₃, LiN(CF₃SO₂)₂, LiDFOB, LiBOB, lithium bis(trifluoromethanesulfonyl)imide (LiTFSI), or lithium bis(fluorosulfonyl)imide (LiFSI).

6. The electrochemical cell as claimed in any preceding claim, wherein the polymer comprises polyethylene oxide) or poly(vinylidene fluoride).

7. The electrochemical cell of any preceding claim, wherein the polymer has an average molecular weight (M_{w}) in the range of between about 100,000 and 10,000,000 grams per mole.

8. The electrochemical cell of any preceding claim, wherein the weight percentage of the polymer in the solid electrolyte is at least 50.

9. The electrochemical cell of any preceding claim, wherein the cathode comprises
i) 50-98 wt.% a fluorinated carbon nanotube (F-CNT);
ii) 1-35 wt.% an alkali metal-containing salt; and
iii) 1-35 wt.% an organic polymer or copolymer.

10. The electrochemical cell of claim 9, wherein the cathode does not further comprise a carbon-based conductive-adjuvant.

11. The electrochemical cell of claim 9 or claim 10, wherein the organic polymer or copolymer of the cathode and the polymer of the solid electrolyte comprise the same material, preferably wherein the organic polymer or copolymer of the cathode and the polymer of the electrolyte both comprise poly(ethylene oxide).

12. The electrochemical cell of any of claims 9 to 11, wherein the alkali metal-containing salt of the cathode and the alkali metal-containing electrolyte salt of the electrolyte comprise the same material, preferably wherein the alkali metal-containing salt of the cathode and the alkali metal-containing electrolyte salt of the electrolyte both comprise lithium bis(trifluoromethanesulfonyl)imide (LiTFSI).

13. The electrochemical cell of any preceding claim, wherein the cathode further comprises an inorganic active stabilizer comprising an alkali metal compound, preferably wherein the inorganic active stabilizer comprises Li₇La₃Zr₂O₁₂ (LLZO).

14. The electrochemical cell of claim 13, wherein the LLZO is formed from nanoparticles thereof.

15. The electrochemical cell of any preceding claim, wherein the solid electrolyte is formed as a layer having a thickness of least 5 microns, optionally at least 25 microns, more optionally at least 50 microns.

16. The electrochemical cell of any preceding claim, wherein the anode comprises lithium or an alloy thereof.

17. The electrochemical cell of any preceding claim, shaped into a bobbin shape or a spiral wound shape.

18. A container containing the electrochemical cell of any preceding claim, the container defining a space adjacent the cell to allow for thermal expansion thereof.

19. A system comprising the container of claim 18 or an electrochemical cell according to any of claims 1 to 17 coupled with a power control circuit, wherein the power control circuit is operable to discharge the electrochemical cell at a first voltage and at a second voltage;
wherein the second voltage is lower than the first voltage; and
output terminals electrically connected to the power control circuit for providing the output voltage to a load.

20. The system according to claim 19, wherein the second voltage is at least 20%, preferably at least 50%, optionally less than 100% of the first voltage.

21. The system according to claim 19 or claim 20, wherein the power control circuit is a DC-to-DC voltage convertor.

22. The use of an electrochemical cell as claimed in any of claims 1 to 17, the cell in the container of claim 18 or the system of claim 19 to 21, at a temperature of greater than about 65 °C, preferably greater than about 100 °C.

23. The use of an electrochemical cell as claimed in claim 22 for powering a tool in a subterranean well, preferably in a subterranean well for oil and/or gas.
